# EUROPÄISCHE PATENTSCHRIFT

(11) **EP 3 222 477 B1**
(45) Veröffentlichungstag und Bekanntmachung des Hinweises auf die Patenterteilung: **18.11.2020**
(21) Anmeldenummer: 16203218.9
(22) Anmeldetag: 09.12.2016
(51) Int. Cl.: B60T 8/17, B60T 8/1761

(54) **VERFAHREN ZUM BETREIBEN EINES LANDWIRTSCHAFTLICHEN FAHRZEUGS SOWIE LANDWIRTSCHAFTLICHES FAHRZEUG**
METHOD OF OPERATING AN AGRICULTURAL VEHICLE AND AN AGRICULTURAL VEHICLE
PROCÉDÉ DE FONCTIONNEMENT D'UN VÉHICULE AGRICOLE ET VÉHICULE AGRICOLE

(30) Priorität: 21.03.2016 DE 102016105151
(43) Veröffentlichungstag der Anmeldung: 27.09.2017
(73) Patentinhaber: CLAAS Tractor S.A.S., 78141 Vélizy-Villacoublay Cedex (FR)
(72) Erfinder: Moersch, Claus, 33449 Langenberg (DE); Wiedermann, Arno, 33397 Rietberg (DE)
(74) Vertreter: CLAAS Gruppe

(56) Entgegenhaltungen:
- EP-A1- 0 821 188
- WO-A1-2005/085030
- DE-A1- 19 846 667
- FR-A1- 2 863 213

## Beschreibung

Die Erfindung betrifft ein Verfahren zum Betreiben eines landwirtschaftlichen Fahrzeugs, insbesondere eines Traktors, mit einem Antriebsstrang, umfassend an einer ersten Fahrzeugachse und einer zweiten Fahrzeugachse angeordnete Räder und ein Schaltgetriebe, sowie mit einem Bremssystem zur Beaufschlagung von Radbremsen in Abhängigkeit vom Radbremsverhalten, welches zur Ansteuerung der Beaufschlagung der Radbremsen eine Steuerungseinrichtung umfasst, der von den Rädern zugeordneten Drehzahlsensoren Signale zugeführt und von dieser ausgewertet werden, so dass die Bremskraft der jeweiligen Radbremse individuell geregelt wird.

Weiterhin betrifft die Erfindung ein landwirtschaftliches Fahrzeug, insbesondere Traktor, mit einem Antriebsstrang, umfassend an einer ersten Fahrzeugachse und einer zweiten Fahrzeugachse angeordnete Räder und ein Schaltgetriebe, sowie mit einem Bremssystem zur Beaufschlagung von Radbremsen in Abhängigkeit vom Radbremsverhalten, welches eine Steuerungseinrichtung zur individuellen Ansteuerung der Beaufschlagung der Radbremsen umfasst, der von den Rädern zugeordneten Drehzahlsensoren Signale zugeführt werden.

Landwirtschaftliche Fahrzeuge, insbesondere Traktoren, weisen ein Bremssystem zur Beaufschlagung von Radbremsen in Abhängigkeit vom Bremsverhalten der jeweiligen Räder des Fahrzeugs auf. Zur Ansteuerung der Beaufschlagung der Radbremsen umfasst das Bremssystem eine Steuerungseinrichtung. Der Steuerungseinrichtung werden von den Rädern zugeordneten Drehzahlsensoren Signale zugeführt, wobei die Steuerungseinrichtung diese Signale auswertet, um die Bremskraft der jeweiligen Radbremse individuell zu regeln.

Während des Abbremsens des Fahrzeuges tritt in Abhängigkeit von den Eigenschaften der Räder und dem Zustand der Fahrbahnoberfläche zwischen einem oder mehreren Rädern und der Fahrbahn ein Schlupf auf. Wird aufgrund des auftretenden Schlupfs der Grenzbereich der Haftung zwischen Rad und Fahrbahn erreicht, kann es zu einem Blockieren und Rutschen des Rades oder der Räder auf der Fahrbahn kommen, was zu einer deutlichen Verlängerung des Bremsweges führt. Die drehzahlabhängige Ansteuerung der Radbremse verhindert hierbei ein zumindest dauerhaftes Blockieren der Räder beim Bremsen durch eine gezielte Verminderung des Bremsdruckes eines jeweils betroffenen Rades. Durch das Bremssystem kann während des Bremsvorgangs abhängig von der maximal erreichbaren Haftreibung zwischen den Rädern und der Fahrbahn eine optimale Verzögerung des Fahrzeuges ermöglicht werden.

Ein Verfahren zum Betreiben eines Traktors mit einem solchen Bremssystem ist in der DE198 46 667 A1 beschrieben. Das Bremssystem des Traktors umfasst eine in einem zentralen Antriebsstrang als Lamellenbremse ausgebildete Hauptbremse in Kombination mit zwei auf geteilten linken und rechten Abtriebswellen angeordneten Radbremsen. Die Radbremsen sind dabei einzeln und wahlweise von einer Steuerungseinrichtung des Bremssystems aktivierbar, welcher Eingangssignale von drei an der Eingangswelle und an den Abtriebswellen der Vorderachse angeordneten Drehzahlsensoren zugeführt werden, um ein unverhältnismäßiges Absinken der Drehzahl zu erfassen, was repräsentativ für das Auftreten von Schlupf beziehungsweise das Blockieren eines oder mehrerer Räder ist.

Die WO 2005/085030 A1 offenbart ein Verfahren zum Betreiben eines Fahrzeugs mit einem Antriebsstrang, umfassend an einer ersten Fahrzeugachse und einer zweiten Fahrzeugachse angeordnete Räder und ein Schaltgetriebe, sowie mit einem Bremssystem zur Beaufschlagung von Radbremsen in Abhängigkeit vom Radbremsverhalten, welches zur Ansteuerung der Beaufschlagung der Radbremsen eine Steuerungseinrichtung umfasst, der von den Rädern zugeordneten Drehzahlsensoren Signale zugeführt und von dieser ausgewertet werden, so dass die Bremskraft der jeweiligen Radbremse individuell geregelt wird, wobei die Beaufschlagung der Radbremse mindestens eines Rades zudem in Abhängigkeit von einer durch den Antriebsstrang auf das mindestens eine Rad übertragenen Kraft und/oder eines Momentes geregelt wird.

Die Aufgabe der vorliegenden Erfindung besteht darin, das Verfahren zum Betreiben eines landwirtschaftlichen Fahrzeugs, insbesondere eines Traktor, der eingangs genannten Art derart weiterzuentwickeln, dass sich dieses durch einen erhöhten Fahrkomfort auszeichnet.

Diese Aufgabe wird, ausgehend vom Oberbegriff des jeweiligen unabhängigen Patentanspruchs, durch dessen kennzeichnende Merkmale gelöst. Vorteilhafte Ausgestaltungen sind in den von diesen abhängigen Patentansprüchen wiedergegeben, welche jeweils für sich genommen oder in Kombination miteinander einen Aspekt der Erfindung darstellen können.

Die Aufgabe wird im Rahmen eines Verfahrens zum Betreiben eines landwirtschaftlichen Fahrzeugs gelöst, wobei das Fahrzeug einen Antriebsstrang mit an einer ersten Fahrzeugachse und einer zweiten Fahrzeugachse angeordneten Rädern und ein Schaltgetriebe umfasst, sowie ein Bremssystem zur Beaufschlagung von Radbremsen in Abhängigkeit vom Radbremsverhalten aufweist, welches zur Ansteuerung der Beaufschlagung der Radbremsen eine Steuerungseinrichtung umfasst, der von den Rädern zugeordneten Drehzahlsensoren Signale zugeführt und von dieser ausgewertet werden, so dass die Bremskraft der jeweiligen Radbremse individuell geregelt wird.

Das Verfahren ist dadurch gekennzeichnet, dass die Beaufschlagung der Radbremse mindestens eines Rades zudem in Abhängigkeit von einer durch den Antriebsstrang auf das mindestens eine Rad übertragenen Kraft und/oder eines Momentes geregelt wird. Das erfindungsgemäße Verfahren berücksichtigt somit eine Änderung der von dem Antriebsstrang auf eines oder mehrere Räder übertragenen Kraft und/oder das Moment, welche insbesondere zu einer negativen Beschleunigung der Räder führen kann. Im Zusammenspiel mit der Drehzahlüberwachung an den einzelnen Rädern wird erreicht, dass eine Änderung der von dem Antriebsstrang zusätzlich auf die Räder aufgebrachten, kurzzeitig wirkenden Kräfte oder Momente während eines Bremsvorganges zu einem Ansprechen der Regelung zur Beaufschlagung der Radbremse oder Radbremsen durch die Steuerungseinrichtung in der Weise führt, dass die von dem Antriebsstrang zusätzlich übertragene Kraft und/oder das Moment genutzt wird, um die Radbremsen mit einer resultierenden Bremskraft zu beaufschlagen, die der Bremswirkung entspricht, welche durch die Betriebsbremse vor einer Änderung eingeleitet wurde.

Hierdurch wird die Anzahl an Eingriffen der Steuerungsvorrichtung zur Vermeidung des Blockierens der Räder aufgrund der von dem Antriebsstrang zusätzlich auf die Räder aufgebrachten, kurzzeitig wirkenden Kräfte oder Momente während eines Bremsvorganges reduziert. Das Verfahren ermöglicht während des Bremsvorganges einen Betrieb im Grenzbereich der Haftreibung der Räder unter Berücksichtigung der dem Antriebsstrang zusätzlich übertragenen Kraft und/oder des Moments. Wegen der erreichbaren Reduzierung der Anzahl der Eingriffe kann der Verschleiß der Radbremsen reduziert werden.

Hierzu kann das Auftreten einer im Wesentlichen sprunghaften Änderung der durch den Antriebsstrang auf das mindestens eine Rad übertragenen Kraft und/oder des Moments erfasst oder bestimmt werden. Diese sind auf Lastwechsel im Antriebsstrang zurückzuführen. Ein Auslöser für eine derartige Änderung kann beispielsweise ein Schaltvorgang des Getriebes sein. Insbesondere der Wechsel von einem höheren in einen niedrigeren Gang führt zu einer Änderung des von dem Antriebsstrang übertragenen Moments, welche als Ruck wahrgenommen wird. Das Auftreten einer solchen Änderung kann als Auslöser für einen Eingriff der Steuerungseinrichtung verwendet werden, um eine Regelung der von dem Bremssystem generierten Bremskraft durchzuführen.

Insbesondere kann der Verlauf einer im Wesentlichen sprunghaften Änderung der durch den Antriebsstrang auf das mindestens eine Rad übertragenen Kraft und/oder des Moments bestimmt werden. Die Kenntnis von Dauer und Amplitude der Änderung ermöglicht eine gezielte Regelung des Bremssystems, im Fall des Herunterschaltens unter Ausnutzung der Bremswirkung aufgrund des Schaltvorganges. Die vom Bremssystem generierte Bremskraft kann temporär in der Größenordnung der durch das Herunterschalten hervorgerufenen Bremskraft reduziert werden, so dass der Antriebsstrang nicht kraftfrei gemacht werden muss. Dies führt zu einer Entlastung des Bremssystems und der Getriebekupplungen. Wegen des verbleibenden Kraftschlusses im Antriebsstrang kann eine Reduzierung des Kraftstoffverbrauchs erreicht werden. Dazu kann ein die Änderung der durch den Antriebsstrang auf das mindestens eine Rad übertragenen Kraft und/oder des Moments repräsentierendes Signal von der Steuerungseinrichtung ausgewertet werden. Hierzu können mittels geeigneter Sensoren der Kraft- und/oder Momentenverlauf im Antriebsstrang erfasst werden. Alternativ können in der Steuerungseinrichtung entsprechende, durch Berechnung abgeschätzte Werte hinterlegt sein, welche Kraft- und/oder Momentenverläufe aufgrund von Schaltvorgängen in verschiedenen Betriebssituationen wiedergeben. Anhand des sensorisch bestimmten oder beispielsweise durch Berechnung abgeschätzten Verlaufs kann die Regelung des Bremssystems durch die Steuerungseinrichtung in Kenntnis von Dauer und Amplitude der vom Antriebsstrang übertragenen Kraft und/oder des Moments durchgeführt werden. Vorzugsweise kann bei einem Schaltvorgang zur Änderung des Getriebeganges die Änderung der durch den Antriebsstrang übertragenen Kraft und/oder des Moments von der Steuerungseinrichtung bestimmt werden.

Erfindungsgemäß wird bei einer Schaltung einer Kupplung zum Ein- oder Ausschalten eines Allradfahrbetriebmodus des landwirtschaftlichen Fahrzeugs die Änderung der durch den Antriebsstrang übertragenen Kraft und/oder des Moments von der Steuerungseinrichtung bestimmt. In vorteilhafter Weise kann die von dem Bremssystem aufgebrachte Bremskraft bei einem Schaltvorgang in etwa um den Betrag der Bremskraft verändert werden, der, hervorgerufen durch den Schaltvorgang, von dem Antriebsstrang auf die Räder übertragen wird.

Weiterhin wird die Aufgabe bei einem landwirtschaftlichen Fahrzeug, insbesondere Traktor, gelöst, wobei das Fahrzeug einen Antriebstrang aufweist, umfassend an einer ersten Fahrzeugachse und einer zweiten Fahrzeugachse angeordnete Räder und ein Schaltgetriebe. Das Fahrzeug ist außerdem mit einem Bremssystem zur Beaufschlagung von Radbremsen in Abhängigkeit vom Radbremsverhalten versehen, welches eine Steuerungseinrichtung zur individuellen Ansteuerung der Beaufschlagung der Radbremsen aufweist, der von den Rädern zugeordneten Drehzahlsensoren Signale zugeführt werden. Dabei soll die Steuerungseinrichtung zur Regelung der Beaufschlagung der Radbremse mindestens eines Rades in Abhängigkeit von einer durch einen Antriebsstrang auf das mindestens eine Rad übertragenen Kraft und/oder eines Moments ausgebildet sein. Da der Antriebsstrang während eines Bremsvorganges nicht kraftfrei gemacht wird, führt die Regelung zu einer Verbesserung des Fahrkomforts. In vorteilhafter Weise kann die Steuerungseinrichtung zur Erfassung eines Schaltvorgangs des Schaltgetriebes eingerichtet sein. Hierzu kann die Steuerungseinrichtung durch Signalleitungen mit dem Schaltgetriebe in Verbindung stehen. Das Auslösen eines Schaltvorganges kann somit erfasst werden und eine entsprechend der zu erwartenden Änderung der vom Antriebsstrang übertragenen Kraft durch einen Wechsel des Getriebeganges Regelung der Beaufschlagung der Radbremse durchgeführt werden.

Erfindungsgemäß ist die Steuerungseinrichtung zur Erfassung einer Betätigung einer Kupplung zum Ein- oder Ausschalten eines Allradfahrbetriebmodus' des landwirtschaftlichen Fahrzeugs eingerichtet. Hierzu kann die Steuerungseinrichtung durch eine Signalleitung mit der Kupplung oder einem das Schalten der Kupplung auslösenden Bedienelement in Verbindung stehen. Insbesondere kann jeder Radbremse ein Ventilsteuerblock zugeordnet sein, der individuell durch die Steuerungseinrichtung ansteuerbar ist.

Die Erfindung ist nicht auf die angegebene Kombination der Merkmale der unabhängigen Patentansprüche und der davon abhängigen Patentansprüche beschränkt. Es ergeben sich darüber hinaus weitere Möglichkeiten, einzelne Merkmale, insbesondere dann, wenn sie sich aus den Patentansprüchen, der nachfolgenden Beschreibung der Ausführungsbeispiele oder unmittelbar aus der Zeichnung ergeben, miteinander zu kombinieren. Außerdem soll die Bezugnahme der Patentansprüche auf die Zeichnung durch die Verwendung von Bezugszeichen den Schutzumfang der Patentansprüche auf keinen Fall auf die dargestellten Ausgestaltungsbeispiele beschränken.

Die vorliegende Erfindung wird nachstehend anhand eines in den Zeichnungen dargestellten Ausführungsbeispieles näher erläutert.

Es zeigen:
- Fig. 1: eine schematische Ansicht eines Antriebsstranges eines landwirtschaftlichen Fahrzeugs,
- Fig. 2: ein Flussdiagramm zur Veranschaulichung des Verfahrens zum Betreiben eines landwirtschaftlichen Fahrzeugs,
- Fig. 3a: Diagramm von Getriebeschaltstellungen,
- Fig. 3b: Diagramm von Bremskraftverläufen an einem Rad und
- Fig. 3c: Diagramm von Bremskraftverläufen an einem Rad.

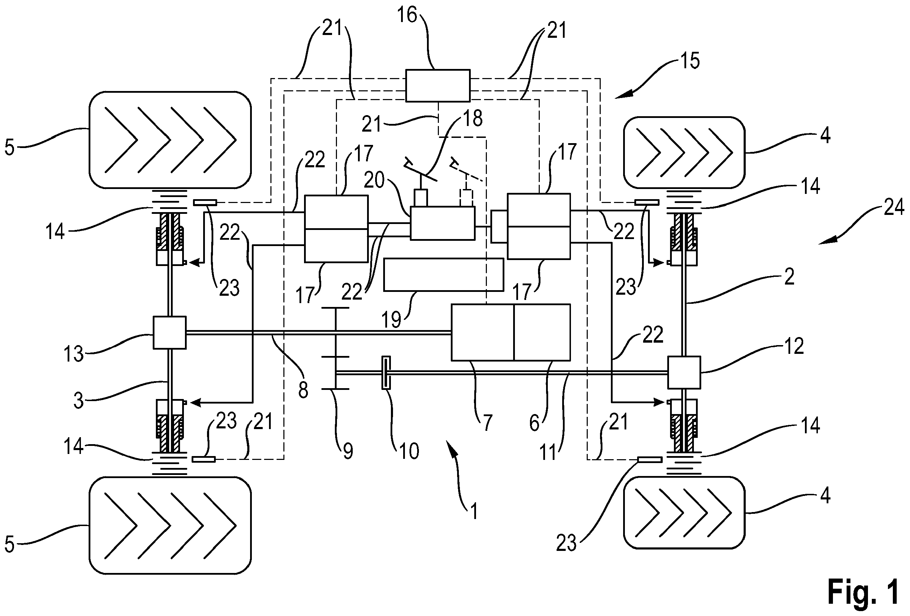

Die Darstellung in Fig. 1 zeigt eine schematische Ansicht eines Antriebsstranges 1 eines als landwirtschaftliches Fahrzeug 24 ausgeführten Traktors. Der Antriebsstrang 1 des Fahrzeugs 24 umfasst eine erste Fahrzeugachse 2 und eine zweite Fahrzeugachse 3. Zumindest die erste Fahrzeugachse 2 ist als lenkbare Achse ausgeführt. An der ersten Fahrzeugachse 2 sind ein erstes Paar Räder 4 angeordnet, an der zweiten Fahrzeugachse 3 sind ein zweites Paar Räder 5 angeordnet. Ein Hauptantriebselement 6, welches im Allgemeinen als Verbrennungsmotor ausgeführt ist, ist mit einem Hauptgetriebe 7 verbunden. Das Hauptgetriebe 7 ist als ein eine stufenlos änderbare Abtriebsdrehzahl bereitstellendes Getriebe, ein sogenanntes hydrostatisch-mechanisch leistungsverzweigtes Getriebe, ausgeführt. Über eine Antriebswelle wird das von dem Hauptantriebselement 6 bereitgestellte Drehmoment auf das Hauptgetriebe 7 übertragen.

Das Hauptgetriebe 7 ist durch eine erste Abtriebswelle 8 mit dem Antriebsstrang 1 verbunden, welcher der Übertragung des von dem Hauptgetriebe 7 übersetzten Drehmomentes und der Drehzahl auf die erste Fahrzeugachse 2 und die zweite Fahrzeugachse 3 dient. Der Antriebsstrang 1 umfasst weiterhin ein erstes Differential 12, welches mit der ersten Fahrzeugachse 2 trieblich verbunden ist, sowie ein zweites Differential 13, welches mit der zweiten Fahrzeugachse 2 trieblich verbunden ist.

Der dargestellte Antriebsstrang 1 ist für einen Allradbetrieb des Fahrzeugs 24 ausgelegt. Hierzu ist zwischen dem zweiten Differential 13 der zweiten Fahrzeugachse 3 und dem Hauptgetriebe 7 ein Getriebe 9 zur Einstellung eines Drehmoment- und/oder eines Drehzahlverhältnisses angeordnet. Eine zweite Abtriebswelle 11 verbindet das Getriebe 9 mit dem ersten Differential 12 der ersten Achse 2. Durch eine schaltbare Kupplung 10 sind die erste Abtriebswelle 8 und die zweite Abtriebswelle 11 miteinander kuppelbar.

Ein Bremssystem 15 umfasst eine Steuerungseinrichtung 16, welche durch bidirektionale Signalleitungen 21 mit Ventilsteuerblöcken 17, Drehzahlsensoren 23 sowie dem Hauptgetriebe 7 steuerungstechnisch verbunden ist. Jedem Rad 4, 5 ist jeweils eine Radbremse 14 zugeordnet, welche hydraulisch oder pneumatisch betätigbar ist. Hierzu weist das Bremssystem 15 eine hydraulische oder pneumatische Druckversorgung 19 auf, welche den für den Bremsvorgang erforderlichen Druck zur Beaufschlagung der Radbremsen 14 bereitstellt.

Mittels Druckrohrleitungen 22 sind die Druckversorgung 19, die Ventilsteuerblöcke 17 und die Radbremsen 14 miteinander verbunden. Ein durch ein Bedienelement 18, insbesondere ein einfaches oder ein doppeltes, in einer Kabine des Fahrzeugs 24 angeordnetes Fußpedal, und ein durch eine Bedienperson betätigbares Bremsventil 20 dienen der Ansteuerung des Bremssystems 15. Mittels der Ventilsteuerblöcke 17, die von der Steuerungseinrichtung 16 unabhängig voneinander ansteuerbar sind, lässt sich die Bremskraft jeder Radbremse 14 individuell regeln.

Die Steuerungseinrichtung 16 empfängt von den Drehzahlsensoren 23 die Drehzahl der Räder 4, 5 repräsentierende Signale, die von der Steuerungseinrichtung ausgewertet werden. Anhand der Auswertung lässt sich bestimmen, ob zwischen einem oder mehreren Rädern 4, 5 und der befahrenen Oberfläche ein Schlupf auftritt, der das Fahrverhalten negativ beeinflusst. Insbesondere beim Bremsen soll das Blockieren eines oder mehrere Räder 4, 5 wegen eines Verlustes der Haftreibung vermieden werden. Hierzu regelt die Steuerungseinrichtung 16 in Abhängigkeit von der bestimmten Drehzahl der jeweiligen Räder 4, 5 die Bremskraft der jeweiligen Radbremse 14 individuell.

Darüber hinaus kann die Steuerungseinrichtung 16 dazu eingerichtet sein, durch gezieltes Bremsen einzelner Räder 4, 5, ein Schleudern des Fahrzeugs 24 im Grenzbereich in Kurven sowohl beim Übersteuern als auch beim Untersteuern zu verhindern, um die Kontrolle über das Fahrzeug 24 zu sichern. Hierzu weist das Fahrzeug 24 neben den Drehzahlsensoren 23 weitere, nicht dargestellte Sensoren, wie Lenkwinkelsensor, Gierratensensor oder Beschleunigungssensor, auf.

Weiterhin empfängt die Steuerungseinrichtung 16 mittels der Signalleitung 21 von dem Hauptgetriebe 7 Signale, welche einen jeweils eingelegten Gang sowie einen Gangwechsel repräsentieren. Ein Gangwechsel führt bei dem als Lastschaltgetriebe ausgeführten Hauptgetriebe 7 zu einer Änderung der von dem Antriebsstrang 1 übertragenen Kräfte auf die Räder 4, 5. Insbesondere bei einem Herunterschalten des Hauptgetriebes 7 kommt es zu einem Ruck, einer Drehmomentspitze, welcher durch den Antriebsstrang 1 auch auf die Räder 4, 5 übertragen wird. Bei einem Herunterschalten des Hauptgetriebes 7 während eines Bremsvorganges wirkt somit eine nicht konstante und ungleichmäßige Bremskraft an den Rädern 4, 5, wodurch es zu einem Blockieren der Räder 4, 5 und somit zu einer Regelung der Bremskraftbeaufschlagung durch die Steuerungseinrichtung 16 kommen kann.

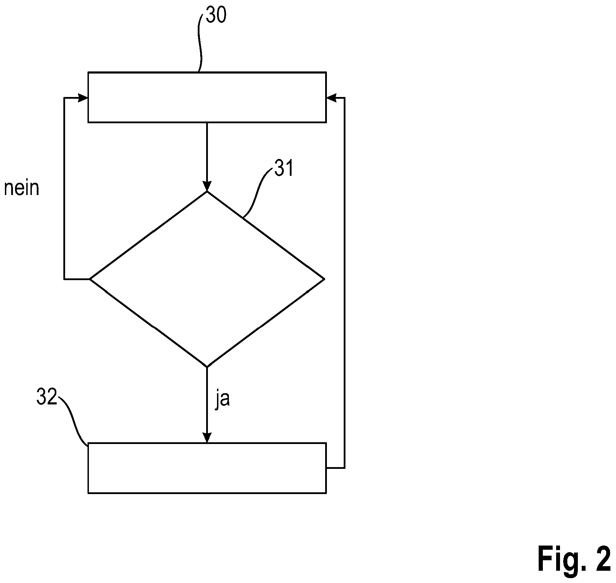

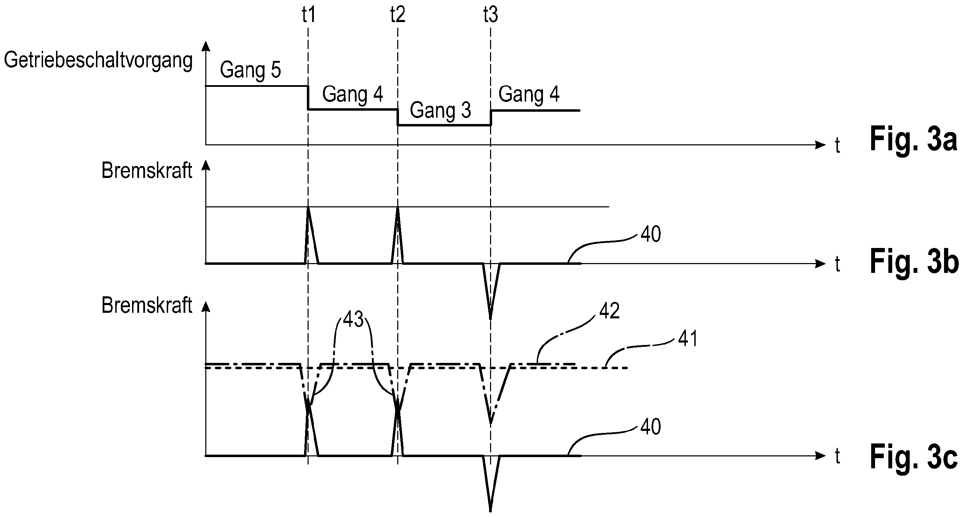

In Fig. 2 ist ein Flussdiagramm zur Veranschaulichung des Verfahrens zum Betreiben eines landwirtschaftlichen Fahrzeugs 24 dargestellt. Die Darstellung in Fig. 3a bis 3c zeigt Diagramme von Getriebeschaltstellung und Bremskraftverläufen an einem Rad 4, 5, die auf die Betätigung der Betriebsbremse, des Eingriffs der Steuerungseinrichtung 16 zur Bremskraftregelung sowie einen Lastwechsel im Antriebsstrang 1 zurückzuführen sind. Das erfindungsgemäße Verfahren wird anhand der Fig. 2 und 3a bis 3c erläutert.

Das Flussdiagramm gemäß Fig. 2 stellt eine stark vereinfachte Situation eines Bremsvorganges dar, während dessen lediglich eine Änderung der von dem Antriebsstrang 1 übertragenen Kraft oder des Moments zu einer Regelung der Bremskraft durch die Steuerungseinrichtung 16 führt, um ein Blockieren der Räder 4, 5 aufgrund dieser Änderung zu verhindern. Im Schritt ersten 30 beginnt die Überwachung des Bremssystems 15 durch die Steuerungseinrichtung 16 mit dem Einleiten eines Bremsvorganges mittels der Radbremsen 14 durch die Betätigung des Bedienelementes 18. Im zweiten Schritt 31 wird die von dem Antriebsstrang 1 übertragene Kraft beziehungsweise das übertragene Moment bestimmt und überwacht.

Wird während des Bremsvorganges ein Gangwechsel durchgeführt, führt dies zu einer Änderung der von dem Antriebsstrang 1 auf die Reifen 4, 5 übertragenen Kraft oder des Moments. Im Fall des Herunterschaltens führt dies zu einer kurzeitigen, sprunghaften Erhöhung der Bremskraft. Da die Größenordnung der Änderung der von dem Antriebsstrang 1 übertragenen Kraft beziehungsweise des Moments bei einem Gangwechsel bestimmbar ist, regelt die Steuerungseinrichtung 16 im Schritt dritten 32 in Abhängigkeit von dieser Änderung die von dem Bremssystem 15 auf die Radbremsen 14 aufgebrachte Bremskraft in der Weise, dass die Summe der von den Radbremsen 14 aufgebrachten Bremskraft und der durch das Herunterschalten von dem Antriebsstrang 1 auf die Räder 4, 5 aufgebrachte Bremskraft im Wesentlichen der Größenordnung der von dem Bremssystem 15 eingeleiteten Bremskraft vor dem Herunterschalten entspricht.

Das Diagramm in Fig. 3a zeigt verschiedene Getriebeschaltstellungen, die im Verlauf eines Bremsvorganges geschaltet werden können. Ausgehend von einem hohen Gang wird zu einem Zeitpunkt t1 und t2 sukzessive heruntergeschaltet.

Das Diagramm in Fig. 3b stellt den Bremskraftverlauf an einem Rad dar, der auf den jeweiligen Schaltvorgang im Zeitpunkt t1 und t2 zurückzuführen ist. Ein Gangwechsel von einem höheren in einen niedrigeren Gang erzeugt kurzzeitig eine Bremskraft, die vom Antriebsstrang 1 auf die Räder 4, 5 übertragen wird. Der Verlauf der durch den Gangwechsel erzeugten Bremskraft ist durch die durchgehende Linie 40 dargestellt.

Im Diagramm gemäß der Fig. 3c sind ein durch die Betätigung der Betriebsbremse erzeugter konstanter Bremskraftverlauf als punktierte Linie 41, der durch den Gangwechsel erzeugte Bremskraftverlauf 40 sowie ein resultierender Bremskraftverlauf als strichpunktierte Linie 42, der aus der mit dem Gangwechsel korrespondierenden Regelung der Bremskraftverläufe 40 und 41 durch die Steuerungseinrichtung 16 resultiert, dargestellt.

Wie aus dem Diagramm gemäß Fig. 3c ersichtlich, verlaufen der konstante Bremskraftverlauf 41 und der resultierende Bremskraftverlauf 42 gleich, bis es zu einem Gangwechsel kommt. In dem Zeitraum eines Gangwechsels regelt die Steuerungseinrichtung 16 die von dem Bremssystem 15 aufgebrachte Bremskraft 41 in Abhängigkeit von dem durch den Gangwechsel erzeugte Bremskraftverlauf 40, in der Weise, dass die vom Bremssystem 15 aufgebrachte Bremskraft etwa in der Größenordnung der bei einem Gangwechsel erzeugten Bremskraft reduziert wird. Der Verlauf der aufgrund von Gangwechseln in den Zeitpunkten t1 und t2 sich aus dem Eingreifen der Regelung durch die Steuerungseinrichtung 16 ergebenden Bremskraft ist mit 43 bezeichnet und strichliniert dargestellt.

Neben dem Gangwechsel des Hauptgetriebes 7 führt auch das Ein- und Ausrücken der schaltbaren Kupplung 10 zu einer Änderung der von dem Antriebsstrang 1 übertragenen Kraft. Das Betätigen der schaltbaren Kupplung 10 wird ebenfalls in Gestalt eines Signals an die Steuerungseinrichtung 16 übertragen, so dass die Steuerungseinrichtung 16 die von dem Bremssystem 15 auf die Radbremsen 14 aufgebrachte Bremskraft in entsprechender Weise regelt.

Neben einer sensorischen Erfassung der Verläufe von Kraft und Moment im Antriebsstrang 1 ist auch eine Hinterlegung von entsprechenden Verläufen in der Steuerungseinrichtung denkbar. Hierbei können durch Berechnung abgeschätzte Werte in der Steuerungseinrichtung 16 hinterlegt sein, welche Kraft- und/oder Momentenverläufe aufgrund von Schaltvorgängen in verschiedenen Betriebssituationen wiedergeben.

In einem Zeitpunkt t3 ist das Hochschalten des Hauptgetriebes 7 dargestellt. Das Hochschalten führt zu einer kurzzeitigen positiven Beschleunigung im Antriebsstrang 1, wie in Fig. 3b dargestellt. Die von dem Bremssystem 15 aufgebrachte Bremskraft wird durch die vom Antriebsstrang 1 übertragene positive Beschleunigung in der Weise überlagert, dass sich im Zeitpunkt t3 ein resultierender Bremskraftverlauf 42 einstellt, der unterhalb des konstanten Bremskraftverlaufs 41 liegt. Dem könnte durch eine entsprechende Regelung durch die Steuerungseinrichtung 16 entgegengewirkt werden, indem die von dem Bremssystem 15 aufgebrachte Bremskraft kurzzeitig entsprechend erhöht wird.

### Bezugszeichenliste

| | | | |
|---|---|---|---|
| 1 | Antriebsstrang | 40 | Gangwechselbedingter Bremskraftverlauf |
| 2 | Erste Fahrzeugachse | 41 | Konstanter Bremskraftverlauf |
| 3 | Zweite Fahrzeugachse | 42 | Resultierender Bremskraftverlauf |
| 4 | Räder | 43 | Bremskraftverlauf |
| 5 | Räder | | |
| 6 | Hauptantriebselement | t1 | Zeitpunkt 1 |
| 7 | Hauptgetriebe | t2 | Zeitpunkt 2 |
| 8 | Erste Abtriebswelle | t3 | Zeitpunkt 3 |
| 9 | Getriebe | | |
| 10 | Kupplung | | |
| 11 | Zweite Abtriebswelle | | |
| 12 | Erstes Differential | | |
| 13 | Zweites Differential | | |
| 14 | Radbremse | | |
| 15 | Bremssystem | | |
| 16 | Steuerungseinrichtung | | |
| 17 | Ventilsteuerblock | | |
| 18 | Bedienelement | | |
| 19 | Druckversorgung | | |
| 20 | Bremsventil | | |
| 21 | Signalleitung | | |
| 22 | Druckrohrleitung | | |
| 23 | Drehzahlsensor | | |
| 30 | Erster Schritt | | |
| 31 | Zweiter Schritt | | |
| 32 | Dritter Schritt | | |

## Patentansprüche

1. Verfahren zum Betreiben eines landwirtschaftlichen Fahrzeugs (24), insbesondere eines Traktors, mit einem Antriebsstrang (1), umfassend an einer ersten Fahrzeugachse (2) und einer zweiten Fahrzeugachse (3) angeordnete Räder (4, 5) und ein Schaltgetriebe (7), sowie mit einem Bremssystem (15) zur Beaufschlagung von Radbremsen (14) in Abhängigkeit vom Radbremsverhalten, welches zur Ansteuerung der Beaufschlagung der Radbremsen (14) eine Steuerungseinrichtung (16) umfasst, der von den Rädern (4, 5) zugeordneten Drehzahlsensoren (23) Signale zugeführt und von dieser ausgewertet werden, so dass die Bremskraft der jeweiligen Radbremse (14) individuell geregelt wird, **dadurch gekennzeichnet, dass** die Beaufschlagung der Radbremse (14) mindestens eines Rades (4, 5) zudem in Abhängigkeit von einer durch den Antriebsstrang (1) auf das mindestens eine Rad (4, 5) übertragenen Kraft und/oder eines Momentes geregelt wird, wobei bei einer Schaltung einer Kupplung (10) zum Ein- oder Ausschalten eines Allradfahrbetriebmodus' des landwirtschaftlichen Fahrzeugs (24) die Änderung der durch den Antriebsstrang (1) übertragenen Kraft und/oder des Moments von der Steuerungseinrichtung (16) bestimmt' und in der Beaufschlagung der Radbremse berücksichtigt wird.

2. Verfahren nach Anspruch 1, **dadurch gekennzeichnet, dass** das Auftreten einer im Wesentlichen sprunghaften Änderung der durch den Antriebsstrang (1) auf das mindestens eine Rad (4, 5) übertragenen Kraft und/oder des Moments erfasst oder bestimmt wird.

3. Verfahren nach einem der Ansprüche 1 oder 2, **dadurch gekennzeichnet, dass** der Verlauf einer im Wesentlichen sprunghaften Änderung der durch den Antriebsstrang (1) auf das mindestens eine Rad (4, 5) übertragenen Kraft und/oder des Moments bestimmt wird.

4. Verfahren nach einem der Ansprüche 2 oder 3, **dadurch gekennzeichnet, dass** ein die Änderung der durch den Antriebsstrang (1) auf das mindestens eine Rad (4, 5) übertragenen Kraft und/oder des Moments repräsentierendes Signal von der Steuerungseinrichtung (16) ausgewertet wird.

5. Verfahren nach einem der Ansprüche 1 bis 4, **dadurch gekennzeichnet, dass** bei einem Schaltvorgang zur Änderung des Getriebeganges die Änderung der durch den Antriebsstrang (1) übertragenen Kraft und/oder des Moments von der Steuerungseinrichtung (16) bestimmt wird.

6. Verfahren nach einem der Ansprüche 1 bis 5, **dadurch gekennzeichnet, dass** die von dem Bremssystem (15) aufgebrachte Bremskraft bei einem Schaltvorgang in etwa um den Betrag der Bremskraft verändert wird, der, hervorgerufen durch den Schaltvorgang, von dem Antriebsstrang (1) auf die Räder (4, 5) übertragen wird.

7. Landwirtschaftliches Fahrzeug (24), insbesondere Traktor, mit einem Antriebsstrang (1), umfassend an einer ersten Fahrzeugachse (2) und einer zweiten Fahrzeugachse (3) angeordnete Räder (4, 5) und ein Schaltgetriebe (7), sowie mit einem Bremssystem (15) zur Beaufschlagung von Radbremsen (14) in Abhängigkeit vom Radbremsverhalten, welches eine Steuerungseinrichtung (16) zur individuellen Ansteuerung der Beaufschlagung der Radbremsen (14) umfasst, der von den Rädern (4, 5) zugeordneten Drehzahlsensoren (23) Signale zugeführt werden, **dadurch gekennzeichnet, dass** die Steuerungseinrichtung (16) zur Regelung der Beaufschlagung der Radbremse (14) mindestens eines Rades (4, 5) in Abhängigkeit von einer durch einen Antriebsstrang (1) auf das mindestens eine Rad (4, 5) übertragenen Kraft und/oder eines Moments eingerichtet ist, wobei die Steuerungseinrichtung (16) zur Erfassung einer Betätigung einer Kupplung (10) zum Ein- oder Ausschalten eines Allradfahrbetriebmodus' des landwirtschaftlichen Fahrzeugs sowie zur Durchführung des Verfahrens nach Anspruch 1 eingerichtet ist.

8. Landwirtschaftliches Fahrzeug (24) nach Anspruch 7, **dadurch gekennzeichnet, dass** die Steuerungseinrichtung (16) zur Erfassung eines Schaltvorgangs des Schaltgetriebes (7) eingerichtet ist.

9. Landwirtschaftliches Fahrzeug (24) nach einem der Ansprüche 7 oder 8, **dadurch gekennzeichnet, dass** jeder Radbremse (14) ein Ventilsteuerblock (17) zugeordnet ist, der individuell durch die Steuerungseinrichtung (16) ansteuerbar ist.

## Claims

1. A method for operating an agricultural vehicle (24), in particular a tractor, having a drive train (1), and comprising wheels (4, 5) disposed on a first vehicle axle (2) and on a second vehicle axle (3) and a gearbox (7), as well as having a braking system (15) for the application of wheel brakes (14) as a function of the wheel braking behaviour, the braking system comprising a control means (16) for controlling the application of the wheel brakes (14) to which signals from speed sensors (23) associated with the wheels (4, 5) are supplied and evaluated thereby so that the braking force of the respective wheel brakes (14) is individually controlled, **characterized in that** the application of the wheel brakes (14) of at least one wheel (4, 5) is additionally controlled as a function of a force and/or a torque transmitted through the drive train (1) onto the at least one wheel (4, 5), wherein upon using a clutch (10) to engage or disengage an all-wheel drive mode of the agricultural vehicle (24), the change in the force and/or torque transmitted through the drive train (1) is determined by the control means (16) and is taken into consideration in the application of the wheel brakes.

2. The method according to claim 1, **characterized in that** the occurrence of a substantially abrupt change in the force and/or torque transmitted through the drive train (1) onto the at least one wheel (4, 5) is detected or determined.

3. The method according to claim 1 or claim 2, **characterized in that** the profile of a substantially abrupt change in the force and/or torque transmitted through the drive train (1) onto the at least one wheel (4, 5) is determined.

4. The method according to claim 2 or claim 3, **characterized in that** a signal representing the change in the force and/or torque transmitted through the drive train (1) onto the at least one wheel (4, 5) is evaluated by the control means (16).

5. The method according to one of claims 1 to 4, **characterized in that** during a gear change in order to change the gear, the change in the force and/or torque transmitted through the drive train (1) is determined by the control means (16).

6. The method according to one of claims 1 to 5, **characterized in that** the braking force applied by the braking system (15) during a gear change is changed by approximately the amount of braking force generated by the gear change which is transmitted onto the wheels (4, 5) by the drive train (1).

7. An agricultural vehicle (24), in particular a tractor, having a drive train (1), comprising wheels (4, 5) disposed on a first vehicle axle (2) and on a second vehicle axle (3) and a gearbox (7), as well as having a braking system (15) for the application of wheel brakes (14) as a function of the wheel braking behaviour which comprises a control means (16) for individual control of the application of the wheel brakes (14), to which signals from the speed sensors (23) associated with the wheels (4, 5) are supplied, **characterized in that** the control means (16) is configured in order to control the application of the wheel brakes (14) of at least one wheel (4, 5) as a function of a force and/or a torque transmitted through a drive train (1) onto the at least one wheel (4, 5), wherein the control means (16) is configured to detect an actuation of a clutch (10) for engaging or disengaging an all-wheel drive mode of the agricultural vehicle as well as to carry out the method according to claim 1.

8. The agricultural vehicle (24) according to claim 7, **characterized in that** the control means (16) is configured to detect a gear change of the gear box (7).

9. The agricultural vehicle (24) according to claim 7 or claim 8, **characterized in that** a valve control block (17) is associated with each wheel brake (14) and which can be individually controlled by the control means (16).

## Revendications

1. Procédé de fonctionnement d'un véhicule agricole (24), en particulier d'un tracteur, comprenant une chaîne de transmission (1), incluant des roues (4, 5) disposées sur un premier essieu de véhicule (2) et sur un second essieu de véhicule (3) et une transmission (7), ainsi que comprenant un système de freinage (15) pour solliciter des freins de roues (14) en fonction du comportement au freinage, lequel inclut, pour commander la sollicitation des freins de roues (14), un équipement de commande (16) auquel sont envoyés, par des capteurs de vitesse de rotation (23) associés aux roues (4, 5), des signaux qui sont analysés par celui-ci, de façon que la force de freinage du frein de roue respectif (14) soit régulée individuellement, **caractérisé en ce que** la sollicitation du frein de roue (14) au moins d'une roue (4, 5) est régulée en outre en fonction d'une force transmise par la chaîne de transmission (1) à la au moins une roue (4, 5) et/ou d'un couple, en cas d'actionnement d'un embrayage (10) pour activer ou désactiver un mode de traction intégrale du véhicule agricole (24), la modification de la force transmise par la chaîne de transmission (1) et/ou du couple étant déterminée par l'équipement de commande (16) et étant prise en compte dans la sollicitation du frein de roue.

2. Procédé selon la revendication 1, **caractérisé en ce que** la survenue d'une modification sensiblement brusque de la force transmise à la au moins une roue (4, 5) par la chaîne de transmission (1) et/ou du couple est détectée ou déterminée.

3. Procédé selon une des revendications 1 ou 2, **caractérisé en ce que** la variation d'une modification sensiblement brusque de la force transmise à la au moins une roue (4, 5) par la chaîne de transmission (1) et/ou du couple est déterminée.

4. Procédé selon une des revendications 2 ou 3, **caractérisé en ce qu'**un signal représentant la modification de la force transmise à la au moins une roue (4, 5) par la chaîne de transmission (1) et/ou du couple est analysé par l'équipement de commande (16).

5. Procédé selon une des revendications 1 à 4, **caractérisé en ce qu'**en cas de changement de vitesse pour modifier le rapport de transmission, la modification de la force transmise par la chaîne de transmission (1) et/ou du couple est déterminée par l'équipement de commande (16).

6. Procédé selon une des revendications 1 à 5, **caractérisé en ce que**, dans le cas d'un changement de vitesse, la force de freinage exercée par le système de freinage (15) est modifiée sensiblement de la valeur de la force de freinage qui, provoquée par le changement de vitesse, est transmise par la chaîne de transmission (1) aux roues (4, 5).

7. Véhicule agricole (24), en particulier tracteur, comprenant une chaîne de transmission (1), incluant des roues (4, 5) disposées sur un premier essieu de véhicule (2) et sur un second essieu de véhicule (3) et une transmission (7), ainsi que comprenant un système de freinage (15) pour solliciter des freins de roues (14) en fonction du comportement au freinage, lequel inclut, pour commander individuellement la sollicitation des freins de roues (14), un équipement de commande (16) auquel des signaux sont envoyés par des capteurs de vitesse de rotation (23) associés aux roues (4, 5), **caractérisé en ce que** l'équipement de commande (16) est agencé pour régler la sollicitation du frein de roue (14) au moins d'une roue (4, 5) en fonction d'une force transmise à la au moins une roue (4, 5) par une chaîne de transmission (1) et/ou d'un couple, l'équipement de commande (16) étant agencé pour détecter un actionnement d'un embrayage (10) pour activer ou désactiver un mode de traction intégrale du véhicule agricole ainsi que pour réaliser le procédé selon la revendication 1.

8. Véhicule agricole (24) selon la revendication 7, **caractérisé en ce que** l'équipement de commande (16) est agencé par détecter un changement de vitesse de la transmission (7).

9. Véhicule agricole (24) selon une des revendications 7 ou 8, **caractérisé en ce qu'**à chaque frein de roue (14) est associé un bloc de commande de valves (17) qui peut être commandé individuellement par l'intermédiaire de l'équipement de commande (16).
